# EUROPEAN PATENT APPLICATION

(11) **EP 3 335 895 A1**
(43) Date of publication of application: **20.06.2018**
(21) Application number: 17206541.9
(22) Date of filing: 11.12.2017
(51) Int. Cl.: B41M 3/00, B41M 3/18, D06N 7/00, B44C 5/04, B29C 44/00, C08J 9/00

(54) **METHOD OF FORMING A SURFACE COVERING, APPARATUS FOR FORMING A SURFACE COVERING AND COMPOSITION FOR FORMING A SURFACE COVERING**

(30) Priority: 15.12.2016 EP 16204467
(71) Applicant: Ricoh Company, Ltd., Tokyo 143-8555 (JP)
(72) Inventor: BALL, Martin, Telford, Shropshire TF2 9NS (GB); RYMER, Christian, Telford, Shropshire TF2 9NS (GB)
(74) Representative: Lamb, Martin John Carstairs

(57) **Abstract**

The present invention relates to a method of forming a surface covering for example wallpaper or a floor covering and an apparatus for forming a surface covering, in which a substrate surface covering raw material comprising a substrate and a foamable layer formed on the substrate is supplied and a foaming inhibiting composition is applied in a predetermined pattern using an applicator to the foamable layer, wherein the foaming inhibiting composition is a non-aqueous composition. A composition for forming a surface covering is also described.

## Description

### BACKGROUND

### Technical Field

The present invention relates to a method of forming a surface covering for example wallpaper or a floor covering, an apparatus for forming a surface covering and a composition for forming a surface covering.

The present application claims priority from European Patent Application No. 16204467.1, filed on December 15, 2016.

### Description of the Related Art

Wallpaper is widely used in buildings to give a desirable finish and appearance to walls. Similarly, floor coverings formed of sheet-like material can be similarly used to provide floor surfaces with a desired finish and appearance. These surface coverings typically comprise a sheet-like substrate to provide strength and to define a suitable surface for adhering to a surface such as a wall or floor. The surface covering also includes a surface layer formed of resin which provides scratch and stain resistance and also affects the appearance of the surface covering. Typically, the resin layer comprises a polyvinyl chloride-based resin containing an ester-oil-based plasticizer and a foaming agent. As part of the manufacturing process of the surface covering, a foaming agent is used to foam the resin layer to enable the surface covering to be expanded and embossed for decorative effect. The resin layer has depth and three-dimensional decoration can be formed in the resin layer. Conventionally, this is achieved by mechanical embossing means. For example, an embossing roller with the negative of the desired three-dimensional surface pattern formed on its surface is used to impress the desired pattern on the resin layer. However, mechanical embossing lacks flexibility, as the roller can only be used to form one pattern.

For this reason, attempts have been made to form the desired three-dimensional decoration by chemical means. In particular, systems have been proposed in which a foaming inhibitor is applied in a predetermined pattern to the surface of the resin. The foaming inhibitor may operate, for example, by deactivating a foaming accelerator which is included in the foaming resin composition.

In a subsequent step, when foaming of the resin layer takes place, the extent of foaming of a region of the surface will depend on the amount of foaming inhibitor which has been applied thereto. In this way, a three-dimensional surface pattern can be formed in the resin layer.

As the foaming inhibitor can be applied by a digitally controllable device in a known manner, which is controllable by conventional image processing equipment, the three-dimensional pattern formed on the surface covering can be changed very flexibly by controlling the operation of the printing.

WO 2013/050815 discloses a method for producing a wall covering (such as wallpaper) in which a liquid which influences the expansion of expandable material in a wall covering is applied in a desired pattern using a digital printing technique, for example inkjet printing. The liquid which influences the expansion of expandable material may be as described in US 5712018 . US 5712018 discloses a water-based embossing composition for use in chemically embossing a foamable polymeric material, for example a floor covering, which comprises a modifier for modifying the activity of a blowing agent in the resin layer. Typically, the modifier includes a triazole, preferably benzotriazole or tolyltriazole. US 2008/0092773 discloses a recording ink comprising a color material particle, a polymer particle, a water-soluble solvent and water, which may be used in an inkjet recording apparatus.

### Problem to be Solved

The present inventors have discovered that the use of a water-based embossing composition over a long period in an applicator, for example an inkjet printer, leads to problems of clogging, for example of the inkjet printing head, with the attendant problems of poor quality pattern formation or even interruption of the printing process.

Accordingly, an object of the present application is to provide a method of forming a surface covering, an apparatus for forming a surface covering, and a composition for forming a surface covering which can be used to provide high-quality three-dimensional pattern reproduction over a long period in an applicator, for example an inkjet based system.

### SUMMARY OF THE INVENTION

The present inventors have discovered that it is possible to use a non-aqueous foaming inhibiting composition in an applicator such as an inkjet process during the formation of a surface covering over a long period, which leads to reduction in clogging of the inkjet printing head.

Accordingly, in a first aspect, the present invention provides a method of forming a surface covering, comprising the steps of:
supplying a surface covering raw material comprising a substrate and a foamable layer formed on the substrate; and
applying a foaming inhibiting composition in a predetermined pattern to the foamable layer formed on the substrate;
wherein the foaming inhibiting composition is a non-aqueous composition.

In a further aspect, the present invention provides an apparatus for forming a surface covering, comprising:
a feed of a surface covering raw material, the surface covering raw material comprising a substrate and a foamable layer formed on the substrate; and
an applicator containing a foaming inhibiting composition, for applying the foaming inhibiting composition in a predetermined pattern to the foamable layer formed on the substrate;
wherein the foaming inhibiting composition is a non-aqueous composition.

In a further aspect, the present invention provides a foaming inhibiting composition for application to a surface covering raw material in a method of forming a surface covering, the foaming inhibiting composition being a non-aqueous composition and comprising less than 1% by weight of volatile organic compound solvent.

### BRIEF DESCRIPTION OF THE DRAWINGS

The present application will be further described by way of example only with reference to the accompanying drawing, in which:
FIG. 1 is a schematic view of apparatus for forming a surface covering according to an embodiment of the present invention.
FIG. 2 is a schematic diagram illustrating a finished surface covering according to an embodiment of the present invention; and
FIG. 3 is a flowchart illustrating a method of forming a surface covering according to an embodiment of the present invention.

### DETAILED DESCRIPTION

Optional and preferred features of the present invention will be described further below.

According to the present invention, a non-aqueous foaming inhibiting composition is used.

By "non-aqueous" it is meant that water is not used as a solvent. Preferably, the content of water in the foaming inhibiting composition is less than 1% by weight, more preferably less than 0.1 weight percent. The composition of the foaming inhibiting composition will be described in detail further below.

The surface covering to be produced by the invention may comprise any suitable surface covering, but is preferably wallpaper or a floor covering material. The surface covering to be produced by the method of the invention, the apparatus of the invention or the composition of the invention is preferably a textured surface covering. The surface covering of the present invention comprises a substrate and a foamed layer formed on the substrate. The foamed layer is obtainable by foaming a foamable layer of the surface covering raw material.

The substrate may be any conventional substrate. Typically, it is a flat substrate, for example a flat sheet-like material. It may be formed of paper, non-woven fabric or combinations of these materials. Specific examples may be selected from natural paper, plastic film, synthetic paper, non-woven fabric, fleece, cloth, wood and metal thin film or any combination of these materials. In a preferred embodiment, the substrate comprises a fleece-backed paper.

The substrate is preferably selected from a plastic film, a synthetic paper sheet made of a synthetic fiber, or a non-woven fabric sheet if water resistance is required. Specific examples of the plastic film include, but are not limited to, a polyester film, a polypropylene film, a polyethylene film, and a laminated body of nylon, vinylon, and/or acrylic films or sheets. The plastic film is preferably subjected to uniaxial to biaxial drawing for improving its strength. Specific examples of the non-woven fabric sheet includes a sheet formed by spreading polyethylene fibres in a sheet-like pattern and bonding the polyethylene fibres by heat and pressure.

The supply preferably comprises an unwinder roller or any other suitable apparatus.

In a preferred embodiment of the method of the present invention, the step of supplying a surface covering raw material comprises a first step of supplying a substrate and a second step of applying a foamable layer to the substrate. Any suitable method may be used for applying the foamable layer to the substrate. For example, screen coating may be used.

Similarly, the apparatus of the present invention may comprise a supply of a substrate and a foamable layer coater for applying a foamable layer to the substrate.

In an alternative embodiment, the surface covering raw material is prepared separately. The supplying step may therefore simply comprise feeding the surface covering raw material, for example using an unwinder roller.

The surface covering raw material comprising the substrate and the foamable layer may have been heat treated so that the foamable layer forms a "gel" state. The heat treatment temperature should be below a temperature at which the foamable layer foams, in order to avoid premature foaming of the foamable layer.

The heat treatment may be provided as an optional step in the method of the present invention or it may be applied to the surface covering raw material before it is supplied in the method of the invention.

According to the present invention, the step of applying a foaming inhibiting composition in a predetermined pattern to the surface covering raw material is preferably achieved by an inkjet printing method. The applicator used in the apparatus of the invention is preferably an inkjet printer. The composition of the present invention is preferably for application by inkjet printing.

Any suitable inkjet printing apparatus and method may be used. For example, the printhead from a RICOH Pro 4130 (trademark) wide format latex colour printer may be used.

In a preferred embodiment the surface covering raw material is fed as a continuous sheet. Further, it is preferred that the inkjet printing apparatus comprises a drum, the axis of rotation of the drum being orientated at right angles to the direction of feed of the sheet-like surface covering raw material, the sheet-like surface covering raw material being wound around the drum. Preferably, the drum is of relatively large diameter, being preferably in the range 0.1-2 metres, more preferably 0.5-1.5 metres and preferably about 1 metre in diameter. At least one inkjet printing head is mounted adjacent the drum for applying the foaming inhibiting composition to the surface covering raw material while the surface covering raw material is on the outer peripheral surface of the drum. Preferably, the feed speed of the surface covering raw material is 70 metres per minute.

In an alternative embodiment, the inkjet printing apparatus comprises a plurality of drums, at least one inkjet printing head being mounted adjacent to at least one drum. The drums are preferably mounted with their axes parallel. Preferably, the axes lie on a curved surface, so that the surface covering raw material can be tensioned around the drums

The surface covering raw material may be heated while the foaming inhibiting composition is applied. It may be heated to a temperature in the range up to 150°C, preferably in the range 100°C to 150°C.

Heating the surface covering raw material can assist penetration of the foaming inhibiting composition into the foaming layer and thereby enhance the foaming inhibiting effect. However, the surface covering raw material should preferably not be heated to a temperature which is greater than or equal to a temperature at which foaming occurs in order to prevent premature foaming of the foamable layer.

The foaming inhibiting composition comprises a foaming inhibiting material. The foaming inhibiting material is one which is effective to inhibit foaming of the foamable layer. The composition of the foaming inhibiting material will depend upon the foamable layer used. For example, the foaming inhibiting material may be as specified in US 5712018.

Preferably, the foamable layer comprises a resin material and a foaming agent. The resin layer may also include optional components selected from a plasticizer, a foaming accelerator, a filler, a dispersant, a defoamer, an antiblocking agent, and a thickener. Suitable compositions are disclosed for example in US3321413.

The resin material may be any suitable resin, but is preferably vinyl resin, acrylic resin or acrylic resin copolymer, preferably vinyl resin and most preferably polyvinylchloride. Polyvinyl chloride is preferably used because of its good chemical and physical properties and low cost.

The foamable layer is preferably applied as a liquid composition which comprises a mixture of the resin material and the plasticizer and, optionally other components as set out above. It may be obtained commercially, for example under the trade mark PS1652 Expandable PVC Plastisol. The mixture may be in any suitable form, for example an emulsion or a suspension of particulate solid material in a liquid. In a preferred embodiment, the liquid composition comprises the resin in powder form dispersed in a liquid plasticizer.

Preferably, the resin is present in the plasticizer in an amount of 100 parts by weight of resin to 30-100 parts by weight of plasticizer.

Specific examples of the filler include, but are not limited to, aluminium hydroxide, magnesium hydroxide, barium hydroxide, calcium carbonate, magnesium carbonate, calcium sulphate, barium sulphate, ferrous hydroxide, basic zinc carbonate, basic lead carbonate, silica sand, clay, talc, silica, titanium dioxide and magnesium silicate. Among these materials, calcium carbonate, magnesium carbonate, aluminium hydroxide, and magnesium hydroxide are preferred.

Preferably, the foamable layer comprises PVC. In the present specification, 'PVC' means 'polymerizing vinyl chloride'.

Specific examples of the plasticizer include, but are not limited to, phthalate-based plasticizers such as dibutyl phthalate, dinonyl phthalate (DNP), dioctyl phthalate (DOP), dodecyl phthalate (DDP), diisodecyl phthalate (DIDP), diisononyl phthalate (DINP), ditridecyl phthalate (DTDP), and n-hexyl-n-decyl phthalate (NHDP); phosphate based plasticizers such as tri-2-ethylhexyl phosphate (TOP); adipate-based plasticizers such as didecyl adipate (DDA) and diisodecyl adipate (DIDA); trimellitate-based plasticizers such as trioctyl trimellitate (TOTM), and tri-n-octyl-n-decyl trimellitate (nonyl DTM); polyester based plasticizers; epoxy-based plasticizers; sebacate-based plasticizers; azelate-based plasticizers; citrate based plasticizers; glycolate-based plasticizers; ricinolate-based plasticizers; maleate-based plasticizers; fumarate-based plasticizers; pyromellitate-based plasticizers, benzoate plasticizers and itaconate-based plasticizers. Preferably, diisononyl phthalate (DINP) is used.

The purpose of the foaming agent is to produce a foamed effect in the surface covering. Suitably, the foaming agent is adapted to produce a foamed effect in the surface covering when heated, for example when heated to a foaming temperature which may be in the range 200-210°C. The foaming agent may be an inorganic foaming agent or an organic foaming agent. Specific examples of the organic foaming agent include, but are not limited to, azodicarbonamide (ADCA), azobisisobutyronitrile (AIBN), p,p'-oxybisbenzenesulfonohydrazide (OBSH) and dinitrosopentamethylenetetramine (DPT). Preferably azodicarbonamide is used.

The purpose of the accelerator is to reduce the temperature at which the foaming effect occurs. For example, with accelerator the foaming effect may occur at a lower foaming temperature which may be in the range 150-160°C. The accelerator may be selected from compounds of cadmium, lead and zinc such as stearates, octoates, naphthenates and benzoates, which lower the decomposition temperatures of azodicarbonamide.

The foaming inhibiting composition may operate by any suitable route. For example, it may operate so as to inhibit the foaming reaction itself, so that the foaming reaction will not occur at the foaming temperature or lower foaming temperature. Suitable inhibitors for inhibiting the foaming reaction are disclosed in US 3293094.

Alternatively, the foaming inhibitor may operate by inhibiting the action of the accelerator. In particular, preferably, the foaming inhibitor inhibits the accelerator so that foaming does not occur at the lower foaming temperature. For example, if the foaming temperature is in the range 150-160°C, the foaming inhibitor may prevent operation of the accelerator in this temperature range.

The foaming inhibitor that operates by deactivating a foaming accelerator is suitably selected from benzotriazole derivatives, tolutriazole derivatives, N,N'-Diphenyloxamide, N,N-dibezoylhydrazine, N-Salicylal-N'(salicyloyl)hydrazide, N,N'-Bis(salicyloyl)hydrazide, N,N'-Bis(3,5-di-tert-butyl-4-hydroxyphenylpropionyl)hydrazine, 3-N-Salicyloylamino-1,2,4-triazole, decamethylene dicarboxylic acid-bis(N'-salicyloylhydrazide), bis(benzylidene)oxalyl dihydrazide and oxanilide. Preferably, it is selected from benzotriazole derivatives and tolutriazole derivatives, for example N,N-bis (2-ethylhexyl)-4-methyl-1 H-benzotriazole-1-methylamine

The foaming inhibiting composition used in the method and apparatus of the invention comprises foaming inhibitor and may suitably comprise other components selected from a diluent such as a plasticizer or an oily component and a colourant. Preferably, the foaming inhibiting composition comprises less than 1% by weight and most preferably less than 0.1% by weight of a solvent such as a VOC solvent (volatile organic compound). The foaming inhibiting composition of the invention comprises foaming inhibitor and comprises less than 1% by weight and more preferably less than 0.1% by weight of volatile organic compound solvent. A volatile organic compound solvent is preferably as defined by the EU Directive 1999/13/EC (Solvent Emissions Directive), an organic compound having at 293.15 K a vapour pressure of 0.01 kPa or more. It is desired to reduce the amount of volatile organic compound solvent used for environmental and health reasons. The inventors have discovered that compositions can be produced which are non-aqueous and which have little or no volatile organic compound solvent and which can be used in the method of the invention.

It is particularly preferred that at least part of the plasticizer should be the same as a plasticizer, or compatible with the plasticizer, which is present in the foamable layer of the surface covering raw material. This is found to enhance penetration of the foaming inhibiting material into the foamable layer which improves the foaming inhibiting effect. Preferably, at least 30% by weight of the plasticizer is the same as a plasticizer which is present in the foamable layer of the surface covering raw material, more preferably at least 50% by weight and most preferably over 75% by weight.

The viscosity of the diluent is preferably in the range from 5 to 30 mPas, more preferably from 8 to 18 mPas, most preferably from 10 to 12 mPas at 45°C. Viscosity is preferably measured using a Brookfield DV-III Ultra Programmable Rheometer. Specific examples of the plasticizer or oily component which may be used as the diluent include phthalic acid esters such as dibutyl phthalate, dioctyl phthalate (DOP); adipic acid esters such as dioctyl adipate (diethylhexyl adipate; DOA) and diisononyl adipate (DINA); and citric acid esters, such as acetyl tributyl citrate (ATBC). Preferably, dioctyl adipate is used.

The composition will preferably be colourless (that is, not including any colourant) but could also include colourants. Specific examples of colourants include, but are not limited to, carbon black, pigments such as azo pigments, phthalocyanine pigments, nitroso pigments, nitro pigments, vat-dye pigments, mordant dye pigments, basic-dye pigments, acid dye pigments and natural-dye pigments; and oil soluble dyes such as diazo dyes and anthraquinone dyes.

The content of the foaming inhibiting material in the foaming inhibiting composition is preferably in the range from 5% to 100% by weight. If the content is less than 5% by weight, the foaming inhibiting effect is likely to be insufficient. Preferably, the content of the foaming inhibiting material is in the range from 5% to 70%, more preferably from 20% to 50%. By reducing the quantity of the foaming inhibiting material, the viscosity may be reduced. Preferably, the quantity of the diluent is in the range 0-95% by weight, preferably 30-95% by weight, more preferably 50-80% by weight. Increasing the diluent such as plasticizer or oily component can decrease the viscosity.

The viscosity of the foaming inhibiting composition is preferably in the range from 5 to 30 mPas, more preferably from 8 to 18 mPas, most preferably from 10 to 12 mPas at 45°C. Viscosity is preferably measured using a Brookfield DV-III Ultra Programmable Rheometer.

The inkjet print head for applying the foaming inhibiting composition may be heatable to control the viscosity. For example it may be heatable to a temperature in the range 30°C to 60°C, most preferably around 45°C.

Additionally, a visible pattern may be formed on the optional surface covering raw material as part of the process of the present invention, or in the apparatus of the present invention. An image may be formed by any suitable means, for example photogravure printing, but preferably an image is applied by inkjet printing. For example, full colour inkjet printing may be used. Conventional black, cyan, magenta and yellow printing heads may be used. In the embodiment in which the surface covering raw material is fed around a drum, at least one inkjet printing head for forming a visible image is preferably mounted adjacent the drum.

In the embodiment in which the surface covering raw material is fed around a plurality of drums, at least one inkjet printing head for forming a visible image is preferably mounted adjacent at least some of the drums.

Preferably, the foaming inhibiting applying inkjet printing head is located upstream of the at least one visible image inkjet printing head. This is found to give improved image density than if the visible image is applied before the foaming inhibiting composition.

The method of the present invention preferably further comprises the step of foaming the foamable layer after application of the foaming inhibiting composition. Similarly, the apparatus may include a foaming apparatus for foaming the foamable layer after application of the foaming inhibiting composition. Suitably, foaming is achieved by heating the foamable layer. Preferably, it is heated to a temperature in the range 150-250°C, preferably 180-220°C and most preferably about 200°C. Any conventional foaming apparatus may be used.

Optionally, the present invention further comprises a coating step, for applying a suitable coating material to the surface covering raw material before foaming or after foaming, to provide an additional level of surface protection.

The apparatus of the present invention suitably comprises a coating station comprising a screen coater for applying a surface finish to the surface covering raw material.

### DETAILED DESCRIPTION OF THE DRAWING

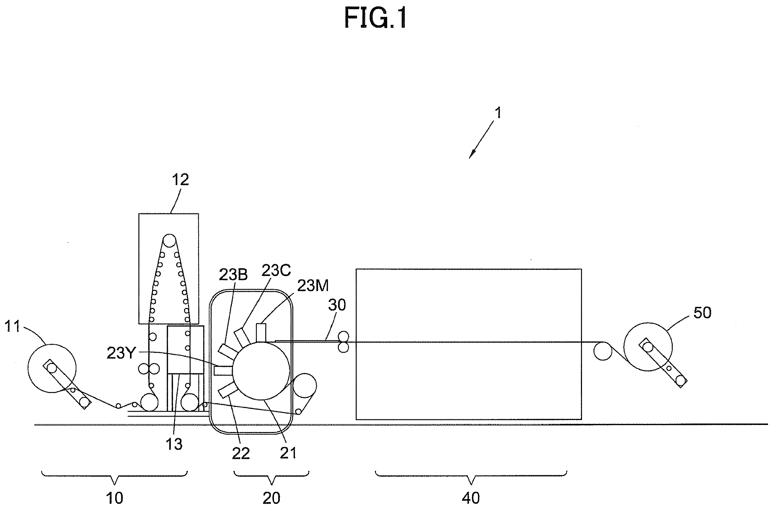

Figure 1 shows an apparatus 1 according to the present invention for forming a texture surface covering. The apparatus 1 comprises a supply of surface covering raw material 10. The supply of surface covering raw material comprises an unwinder roller 11 for supplying a continuous sheet of sheet-like substrate. The sheet-like substrate is fed to a screen coater 12 in which a foamable layer is formed on the substrate to form a surface covering raw material. A preheater 13 is provided for heating the surface covering raw material to a temperature of less than 150°C to gel the resin in the foamable layer. The apparatus further comprises an applicator configured to apply a foaming inhibiting composition in a predetermined pattern to the foamable layer formed on the substrate, such as an inkjet printing station 20. The inkjet printing station 20 comprises a drum 21 of diameter about 1 metre. Arranged in sequence around the drum, in order in the feed direction, there is a foaming inhibiting composition applying inkjet printing head 22, yellow, black, cyan and magenta colour printing heads 23Y, 23B, 23C and 23M respectively.

The apparatus of the present invention comprises a coating station 30 comprising a screen coater for applying a surface finish to the surface covering raw material. The present invention further comprises a foaming apparatus 40 in which the surface covering raw material is heated to a temperature in the range 200°C so that the foamable layer foams, at least in parts where the foaming inhibiting composition has not been applied, so that a three-dimensional textured surface is obtained. Finally, the finished surface covering (textured surface covering) is wound onto a roller rewinder 50 for storage and further transportation.

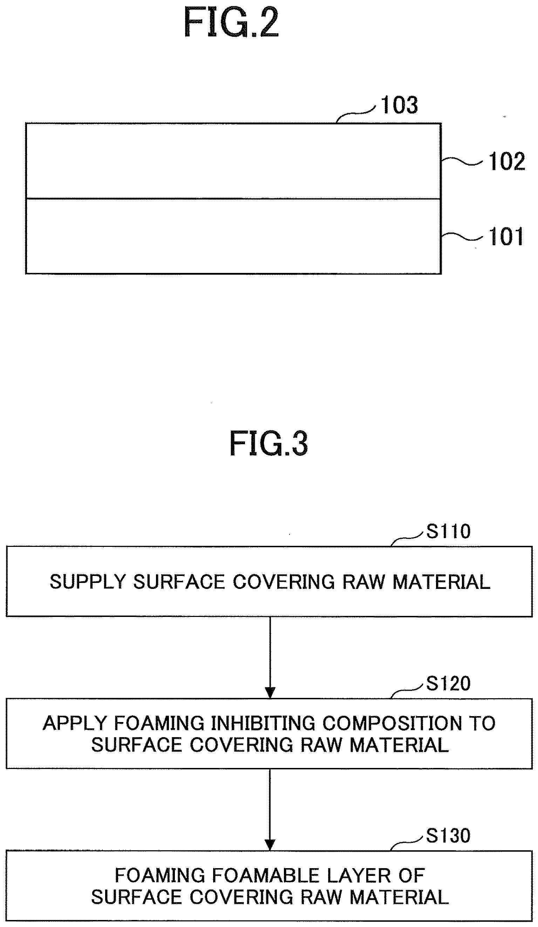

FIG. 2 is a schematic diagram illustrating a finished surface covering obtainable by the method and apparatus of the present invention. Referring to FIG. 2, the surface covering includes a substrate 101 and a foamed layer 102 formed on the substrate 101. The foamed layer 102 is obtainable by foaming the foamable layer of the surface covering raw material.

Next, a method of forming a surface covering according to an embodiment of the present invention is described with reference to FIG. 3. FIG. 3 is a flowchart illustrating a method of forming a surface covering according to an embodiment of the present invention.

In a preferred embodiment of the method of forming a surface covering, at step S110, a surface covering raw material is supplied using, for example, the supply unit 10. The step of supplying a surface covering raw material includes a first step of supplying a substrate using, for example, the unwinder roller 11 and a second step of applying a foamable layer to the substrate by, for example, screen coating, using a foamable layer coater such as the screen coater 12. The method for applying the foamable layer to the substrate is not limited to screen coating, and any other suitable method may be used.

In an alternative embodiment, the surface covering raw material is prepared separately. The supplying step may therefore simply include feeding the surface covering raw material, for example, using an unwinder roller.

Next, at step S120, a foaming inhibiting composition is applied in a predetermined pattern to the surface covering raw material by an applicator such as an inkjet printing apparatus.

Referring to FIG. 3, the method of the illustrated embodiment preferably further includes the step of foaming the foamable layer after application of the foaming inhibiting composition, using, for example, the foaming apparatus 40 (step S130). Any conventional foaming apparatus may be used. Suitably, foaming is achieved by heating the foamable layer. Preferably, the foamable layer is heated to a temperature in the range of 150°C to 250°C, preferably 180°C to 220°C and most preferably about 200°C. Optionally, the method of the illustrated embodiment further includes a coating step, for applying a suitable coating material to the surface covering raw material before foaming or after foaming, to provide an additional level of surface protection.

### Example 1

The apparatus for forming a surface covering 1 according to the present invention was used to provide wallpaper.

The wall comprised a paper having a fleece backing. A foamable layer composition was applied to the fleece-backed paper.

A foaming inhibiting composition comprising 50% by weight of tolyltriazole (CUVAN 303 (trade mark) obtainable from Vanderbilt Chemicals) and 50% by weight of dioctyl adipate obtainable from Brenntag AG was applied in a pattern by inkjet printing head 22 to the raw material surface covering and the surface covering raw material was subsequently foamed. The resulting surface covering showed a clear three-dimensional pattern obtainable on the surface corresponding to the deposition pattern of the foaming inhibiting material applied by the inkjet printing head 22.

### Example 2

Except for using acetyl tributyl citrate (ATBC) instead of dioctyl adipate as a diluent, a foaming inhibiting composition was prepared and applied to the surface covering raw material by the inkjet printing head 22, and the surface covering raw material was thereafter foamed the same as in Example 1. The resulting surface covering showed a clear three-dimensional pattern obtainable on the surface corresponding to the deposition pattern of the foaming inhibiting material applied by the inkjet printing head 22.

The present invention has been described above by way of example only and modifications can be made within the spirit of the invention. The invention extends to equivalents of the features described. The invention also consists in any individual features described or implicit herein or shown or implicit in the drawing or any combination of any such features or any generalisation of any such features or combination.

## Claims

1. A method of forming a surface covering, comprising the steps of:
supplying a surface covering raw material comprising a substrate and a foamable layer formed on the substrate; and
applying a foaming inhibiting composition in a predetermined pattern to the foamable layer formed on the substrate;
wherein the foaming inhibiting composition is a non-aqueous composition.

2. The method according to claim 1, wherein the content of water in the foaming inhibiting composition is less than 1% by weight.

3. The method according to claim 1 or 2, wherein the step of supplying a surface covering raw material comprises a first step of supplying a substrate and a second step of applying a foamable layer to the substrate.

4. The method according to any preceding claim, wherein the foaming inhibiting composition is applied in the predetermined pattern to the foamable layer using inkjet printing.

5. The method according to any preceding claim, wherein the inkjet printing is conducted using an inkjet printing apparatus comprising a drum, the axis of rotation of the drum being orientated at right angles to the direction of feed of the sheet-like surface covering raw material, the surface covering raw material being wound around the drum.

6. The method according to any preceding claim, wherein the inkjet printing is conducted using an inkjet printing apparatus comprising a drum and at least one inkjet printing head for forming a visible image is mounted adjacent the drum, wherein the foaming inhibiting applying inkjet printing head is located upstream of the at least one visible image inkjet printing head.

7. The method according to any preceding claim, wherein the surface covering raw material is heated while the foaming inhibiting composition is applied.

8. The method according to any preceding claim, wherein the foamable layer of the surface covering raw material comprises a resin material, a foaming agent, a plasticizer and an accelerator.

9. The method according to any preceding claim, wherein the resin material of the foamable layer of the surface covering raw material comprises PVC resin, the foaming agent comprises azodicarbonamide, the plasticizer comprises dibutyl phthalate and the accelerator comprises zinc stearate.

10. The method according to any preceding claim, wherein the foaming inhibiting composition comprises foaming inhibitor and, optionally, other components selected from a diluent such as a plasticizer or an oily component and a colourant.

11. The method according to claim 10, wherein the plasticizer or oily component is selected from phthalic acid esters, adipic acid esters or citric acid esters.

12. The method according to any preceding claim, wherein the foaming inhibitor of the foaming inhibiting composition is selected from benzotriazole derivatives and tolutriazole derivatives.

13. The method according to any preceding claim, wherein the foaming inhibiting composition includes less than 1% by weight of a volatile organic compound solvent.

14. The method according to any preceding claim, wherein the foaming inhibiting composition comprises foaming inhibitor and a plasticizer and the foamable layer of the surface covering raw material comprises a resin material, a foaming agent, a plasticizer and an accelerator, at least part of the plasticizer of the foaming inhibiting composition being the same as a plasticizer of the foamable layer of the surface covering raw material.

15. The method according to any preceding claim, further comprising the step of foaming the foamable layer.

16. The method according to any preceding claim, further comprising the step of:
foaming the foamable layer after application of the foaming inhibiting composition.

17. An apparatus for forming a surface covering, comprising:
a feed of a surface covering raw material, the surface covering raw material comprising a substrate and a foamable layer formed on the substrate; and
an applicator containing a foaming inhibiting composition, for applying the foaming inhibiting composition in a predetermined pattern to the foamable layer formed on the substrate;
wherein the foaming inhibiting composition is a non-aqueous composition.

18. A foaming inhibiting composition for application to a surface covering raw material in a method of forming a surface covering, the foaming inhibiting composition being a non-aqueous composition and comprising less than 1% by weight of volatile organic compound solvent.
